Europäisches Patentamt

European Patent Office

Office européen des brevets

(11) Veröffentlichungsnummer: **0 285 910**

A2

# (12) EUROPÄISCHE PATENTANMELDUNG

(21) Anmeldenummer: 88104626.2

(22) Anmeldetag: 23.03.88

(51) Int. Cl.⁴: **B01D 21/18 , E01H 5/09 , E01H 8/10 , E01H 10/00**

(30) Priorität: 07.04.87 DE 8705162 U
24.06.87 DE 8708721 U

(43) Veröffentlichungstag der Anmeldung:
12.10.88 Patentblatt 88/41

(84) Benannte Vertragsstaaten:
AT CH DE FR IT LI

(71) Anmelder: **Bormet, Horst**
**Mittelstrasse 8**
**D-6108 Weiterstadt 2(DE)**

(72) Erfinder: **Bormet, Horst**
**Mittelstrasse 8**
**D-6108 Weiterstadt 2(DE)**

(74) Vertreter: **Katscher, Helmut, Dipl.-Ing.**
**Bismarckstrasse 29**
**D-6100 Darmstadt(DE)**

(54) **Schneeräumgerät an einem Nachklärbecken.**

(57) Die Fahrbahn für einen Räumerarm an biologischen Nachklärbecken von Kläranlagen wird durch ein Schneeräumgerät von Schnee-und Eisablagerungen freigehalten. Hierzu ist an dem Räumerarm (1) ein höhenverstellbarer Bürstenträger (3') angebracht, an dem eine mit einem Bürstenmotor (8) verbundene Räumbürste (7') gelagert ist. Die Räumbürste (7') ist als Topfbürste mit angenähert senkrechter Drehachse (28) ausgeführt. Der Bürstenträger (3') ist an einem mit dem Räumerarm (1) verbundenen Befestigungsträger (2') um eine waagerechte Achse (4) schwenkbar.

FIG. 5

EP 0 285 910 A2

## Schneeräumgerät an einem Nachklärbecken

Die Erfindung betrifft ein Schneeräumgerät für einen Räumerarm an einem Nachklärbecken, der ein entlang einer Fahrbahn bewegbares Fahrwerk aufweist.

Der an biologischen Nachklärbecken von Kläranlagen üblicherweise vorgesehene Räumerarm, auch als Räumerbrücke bezeichnet, bewegt sich bei runden Nachklärbecken auf einer Kreisbahn um die in der Beckenmitte angeordnete Räumerarmlagerung, wobei sich der Räumerarm mit einem Fahrwerk auf einer kreisförmigen Fahrbahn abstützt, die von der Oberkante einer kreisförmigen Wand des Nachklärbeckens bzw. der zugehörigen Ablaufrinne gebildet wird. Bei rechteckigen Nachklärbecken bewegt sich der Räumerarm entlang dem Becken, wobei auf beiden Seiten jeweils ein Fahrwerk auf der von der Oberkante der jeweils zugeordneten Beckenwand gebildeten Fahrbahn entlangfährt.

Wenn sich im Winter Schnee oder Eis auf diesen Fahrbahnen ablagern, kommt es zu Behinderungen und Störungen bei der Bewegung des Räumerarms. Es ist deshalb erforderlich, diese Fahrbahnen regelmäßig von Schnee und Eis zu säubern, was sehr aufwendig von Hand geschehen muß. Die Anbringung von Schneeabweisern unmittelbar vor dem Fahrwerk des Räumerarms schafft keine ausreichende Abhilfe, weil einerseits die auf der Fahrbahn verbleibenden Schneereste vom Fahrwerk festgefahren und zu einer den Fahrbetrieb behindernden Eisschicht verdichtet werden und weil andererseits festgefahrener Schnee oder Eis auf diese Weise nicht mehr entfernt werden können.

Aufgabe der Erfindung ist es daher, ein Schneeräumgerät für einen Räumerarm an einem Nachklärbecken zu schaffen, so daß mit einfachen konstruktiven Mitteln eine zuverlässige vollständige Entfernung des Schnees und etwaiger Eisablagerungen gewährleistet ist.

Diese Aufgabe wird erfindungsgemäß dadurch gelöst, daß an dem Räumerarm ein höhenverstellbarer Bürstenträger angebracht ist, in dem eine mit einem Bürstenmotor verbundene Räumbürste gelagert ist.

Die angetriebene Räumbürste entfernt zuverlässig alle Schnee-und Eisablagerungen auf der Fahrbahn, so daß der Betrieb des Fahrwerks nicht behindert wird und durch das Fahrwerk keine Schneereste festgefahren und verdichtet werden können. Das Fahrwerk trifft somit immer auf eine völlig schneefreie und daher griffige Fahrbahn, so daß keine Gefahr besteht, daß die Räder des Fahrwerks durchdrehen. Die zum Schleppen des Räumerarms und beispielsweise einer daran angebrachten Reinigungsvorrichtung für die Ablaufrinne erforderliche Antriebskraft kann daher auch bei winterlichen Witterungsbedingungen uneingeschränkt aufgebracht werden, ohne daß eine Reinigung der Fahrbahn von Hand erforderlich ist.

Vorzugsweise ist vorgesehen, daß die Räumbürste zylindrisch mit radialen Borsten ausgeführt und am Bürstenträger mit angenähert waagerechter Drehachse gelagert ist, und daß die Drehachse der Räumbürste in einem von 90° abweichenden Winkel zur Verfahrrichtung des Räumerarms angeordnet ist.

Durch die Schrägstellung der Räumbürste wird erreicht, daß der Schnee von der zu reinigenden Fahrbahn zur Seite hin gefördert wird. Vorzugsweise erfolgt der Antrieb der Räumbürste so, daß die Umfangsbewegung der Räumbürste an der Bürstenunterseite in Bewegungsrichtung des Räumerarms und somit entgegen der Relativbewegung der Räumbürste zur Fahrbahn gerichtet ist. Damit wird erreicht, daß der Schnee seitlich nach vorn weggeschleudert wird und nicht zum Fahrwerk gelangen kann.

Gemäß einer anderen bevorzugten Ausführungsform der Erfindung ist vorgesehen, daß die Räumbürste als Topfbürste ausgeführt und mit angenähert senkrechter Drehachse am Bürstenträger gelagert ist. Der Bürstenträger kann am Räumerarm oder an einem mit dem Räumerarm verbundenen Befestigungsträger um eine waagerechte, quer zur Verfahrrichtung gerichtete Achse schwenkbar sein. Hierzu dient ein mit dem Räumerarm oder mit dem Befestigungsträger verbundenes, längenverstellbares Stellglied, das am Bürstenträger angreift. Diese Ausführungsform ist konstruktiv besonders einfach und platzsparend. Da die Förderrichtung der Räumbürste quer zur Verfahrrichtung verläuft, ist bei verhältnismäßig geringem Energieaufwand eine wirksame Reinigung gewährleistet. Durch die Schwenkbewegung des Bürstenträgers wird die Topfbürste so abgesenkt, daß ihre vorauslaufende Kante tiefer liegt als die nachlaufende Kante. Ein Borstenverschleiß kann durch eine stärkere Schwenkung des Bürstenträgers ausgeglichen werden.

Gemäß einer bevorzugten Ausführungsform der Erfindung ist vorgesehen, daß am Bürstenträger oder am Befestigungslager mindestens eine nach unten gerichtete Sprühdüse für ein Taumittel in Verfahrrichtung des Räumerarms vor oder hinter der Räumbürste angeordnet ist. Damit es es möglich, ein flüssiges Taumittel, beispielsweise ein Alkohol-Wasser-Gemisch, auf die Fahrbahn zu sprühen, um dort gebildetes Eis entweder zum Tauen zu bringen oder zumindest so weit zu lösen. daß die Wirkung der Räumbürste unterstützt wird. Auf diese Weise kann sogar bei Eisregen oder gefrierender Nässe die Fahrbahn für den Räumerarm freigehalten werden.

Weitere vorteilhafte Ausgestaltungen des Erfindungsgedankens sind Gegenstand weiterer Unteransprüche.

Die Erfindung wird nachfolgend an Ausführungsbeispielen näher erläutert, die in der Zeichnung dargestellt sind. Es zeigt:

Fig. 1 ein an einem Räumerarm eines Nachklärbeckens angebrachtes Schneeräumgerät in einer Draufsicht,

Fig. 2 eine Seitenansicht des Schneeräumgeräts nach Fig. 1,

Fig. 3 eine abgewandelte Ausführungsform eines Schneeräumgeräts in einer Draufsicht,

Fig. 4 einen Schnitt längs der Linie IV-IV in Fig. 3,

Fig. 5 eine weitere abgewandelte Ausführungsform eines Schneeräumgeräts in einer Seitenansicht und

Fig. 6 eine Draufsicht auf das Schneeräumgerät nach Fig. 5.

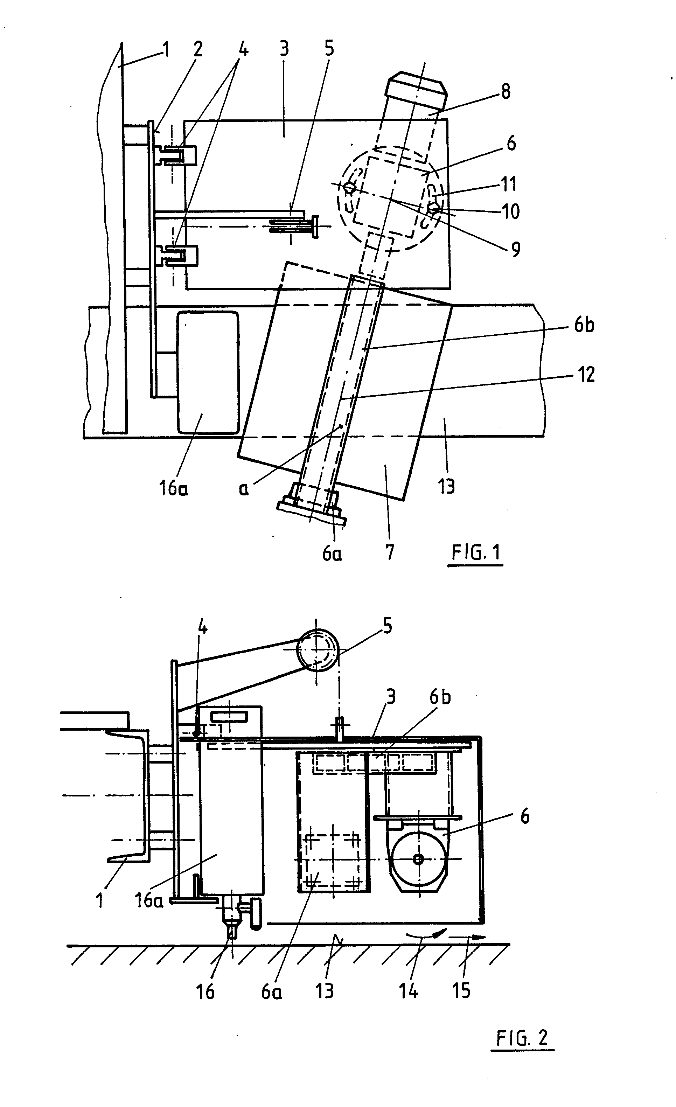

Das in den Fig. 1 und 2 dargestellte Schneeräumgerät ist an einem in der Zeichnung nur angedeuteten Räumerarm 1 eines biologischen Nachklärbeckens einer Kläranlage angebracht. Ein im wesentlichen plattenförmiger Befestigungsträger 2 ist seitlich am Räumerarm 1 angeschraubt.

Ein Bürstenträger 3 ist über Gelenke, die eine waagerechte Achse 4 bilden, schwenkbar und somit höhenverstellbar am Befestigungsträger 2 angebracht. Der Bürstenträger 3 wird von einer Seilwinde 5 getragen, die eine Höhenverstellung ermöglicht.

Ein Bürstenlager 6 trägt die Welle einer Räumbürste 7 und den die Räumbürste 7 treibenden Bürstenmotor 8. Das Bürstenlager 6 ist am Bürstenträger 3 um eine angenähert senkrechte Schwenkachse 9 schwenkbar angebracht. Mittels Schrauben 10, die durch Langlöcher 11 am Bürstenträger 3 greifen, kann das Bürstenlager 6 in einer Schwenkstellung festgelegt werden, in der die Drehachse 12 der Räumbürste 7 in einem von 90° abweichenden Winkel a zur Verfahrrichtung des Räumerarms 1 angeordnet ist.

An ihrem äußeren Ende ist die Welle der Räumbürste 7 in einem Bürstenlager 6a gelagert, das von einem Arm 6b getragen wird, der mit dem Bürstenlager 6 verbunden ist. Bei einer Schwenkung des Bürstenlagers 6 wird auch der Arm 6b und das daran angebrachte zweite Bürstenlager 6a um die senkrechte Schwenkachse 9 geschwenkt.

Der Räumerarm 1 fährt mit einem (nicht dargestellten) Fahrwerk entlang einer Fahrbahn 13, die durch die Oberkante einer kreisförmigen oder geraden Wand des Nachklärbeckens gebildet wird. Man erkennt bei dem in Fig. 1 dargestellten Beispiel, daß der zwischen der Drehachse 12 der Räumbürste 7 und der Fahrbahn 13 gebildete Winkel a etwa 80° beträgt.

Die Drehrichtung des Bürstenmotors 8 wird so gewählt, daß die Umfangsbewegung der angetriebenen Räumbürste 7, die in Fig. 2 mit einem Pfeil 14 angedeutet ist, an der Bürstenunterseite in gleicher Richtung verläuft wie die Bewegungsrichtung 15 des Räumerarms. Die Räumbürste 7 schleudert somit den auf der Fahrbahn 13 liegenden Schnee seitlich nach vorn weg.

Am Befestigungsträger 2 ist in Bewegungsrichtung gesehen unmittelbar hinter der Räumbürste 7 eine Sprühdüse 16 angeordnet, die nach unten auf die Fahrbahn 13 gerichtet ist (Fig. 2). Die Sprühdüse 16 steht mit einem unmittelbar darüber befindlichen Taumittelbehälter 16a in Verbindung, der ein Taumittel enthalten kann, beispielsweise ein Alkohol-Wasser-Gemisch. Durch das mittels der Sprühdüse 16 auf die Fahrbahn 13 gebrachte Taumittel können verbleibende Eisreste oder ein sich bei Eisregen bildender Eisüberzug gelöst werden.

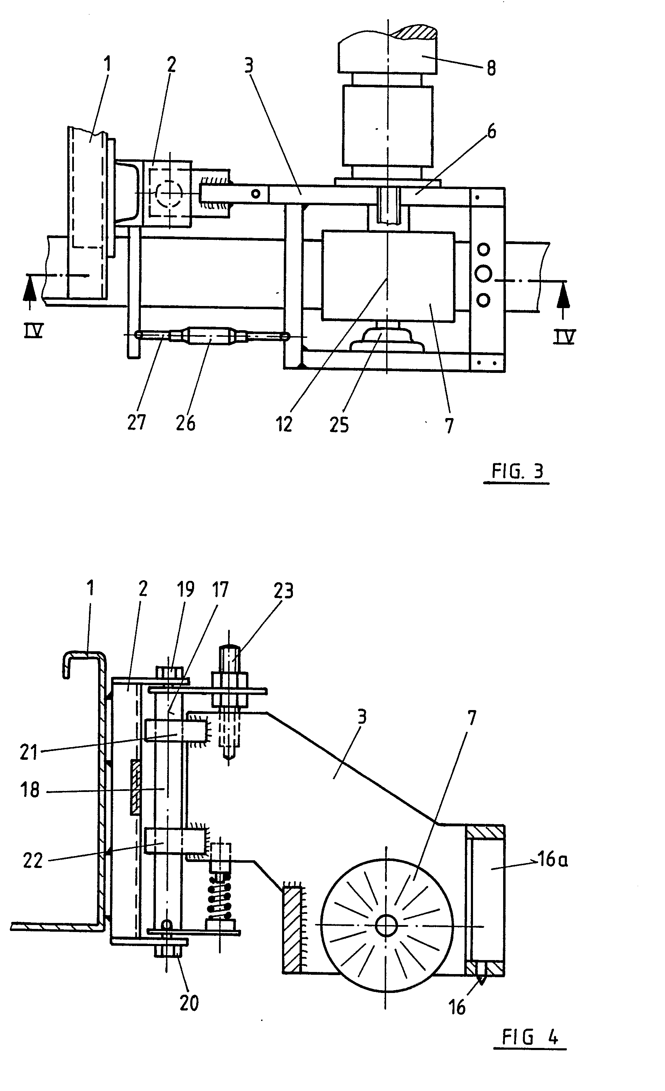

Die in den Fig. 3 und 4 dargestellte Ausführungsform des Schneeräumgeräts unterscheidet sich von der vorher beschriebenen Ausführungsform im wesentlichen dadurch, daß der Bürstenträger 3 am Befestigungsträger 2 um eine senkrechte Schwenkachse 17 schwenkbar ist, die von einer Welle 18 gebildet wird, die zwischen oberen und unteren Drucklagern 19, 20 - schwenkbar am Befestigungsträger 2 gelagert ist. Der Bürstenträger 3 weist zwei Lagerböcke 21 und 22 auf, die entlang der Welle 18 verschiebbar sind.

Mittels einer mit der Welle 18 verbundenen Stellschraube 23, die am Bürstenträger 3 angreift, kann dieser gegenüber der Welle 18 in der Höhe verstellt werden. An der Unterseite des Bürstenträgers 3 kann eine Stützfeder 24 vorgesehen sein, die einen Gewichtsausgleich für die Höhenverstellung des Bürstenträgers 3 bewirkt. Mittels der Stellschraube 23 kann - ähnlich wie durch die Seilwinde 5 beim vorher beschriebenen Ausführungsbeispiel - die Höheneinstellung des Bürstenträgers 3 vorgenommen werden, insbesondere wenn eine Abnutzung an der Räumbürste 7 eingetreten ist.

Bei dem in den Fig. 3 und 4 gezeigten Ausführungsbeispiel ist das Bürstenlager 6 der Räumbürste 7 und des Bürstenmotors 8 fest am Bürstenträger 3 angebracht. Hierbei ist das äußere Ende der Welle der Räumbürste 7 in einem Lager 25 am Bürstenträger 3 gelagert.

Die gewünschte Schrägstellung der Drehachse 12 der Räumbürste 7 wird bei dem Ausführungsbeispiel nach den Fig. 3 und 4 durch die Schwenkung um die senkrechte Schwenkachse 17 erreicht. Zu diesem Zweck ist als längenverstellbares Stellglied beispielsweise ein Spannschloß 26 in einer Spannstange 27 vorgesehen, die einerseits mit dem Befestigungsträger 2 und andererseits mit dem Bürstenträger 3 verbunden ist. Damit kann der Bürstenträger 3 aus der in Fig. 3 gezeigten Stellung in die gewünschte Schrägstellung verschwenkt werden.

Auch bei dem Ausführungsbeispiel nach den Fig. 3 und 4 ist angedeutet, daß eine Sprühdüse 16 mit dem zugehörigen Taumittelbehälter 16a in Bewegungsrichtung vor der Räumbürste 7 angebracht sein kann.

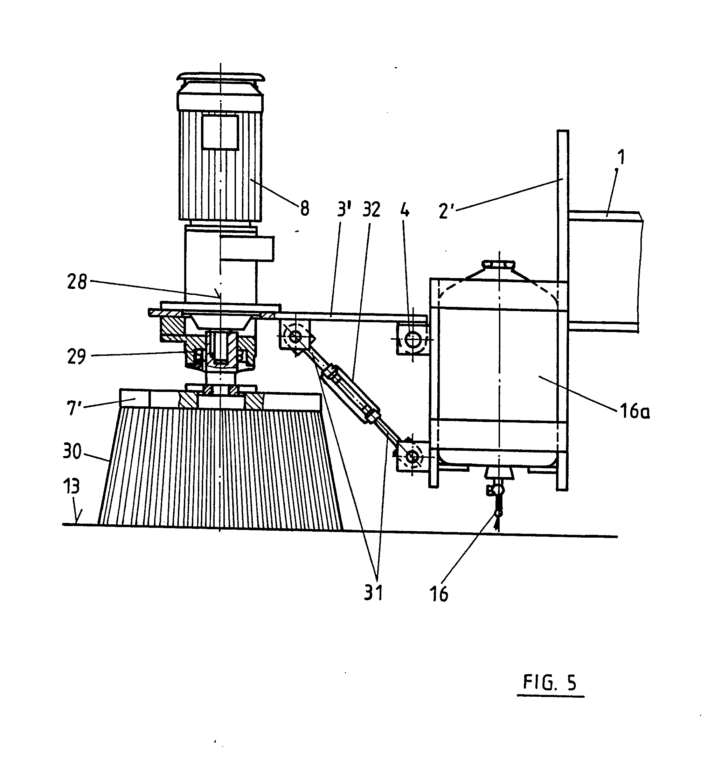

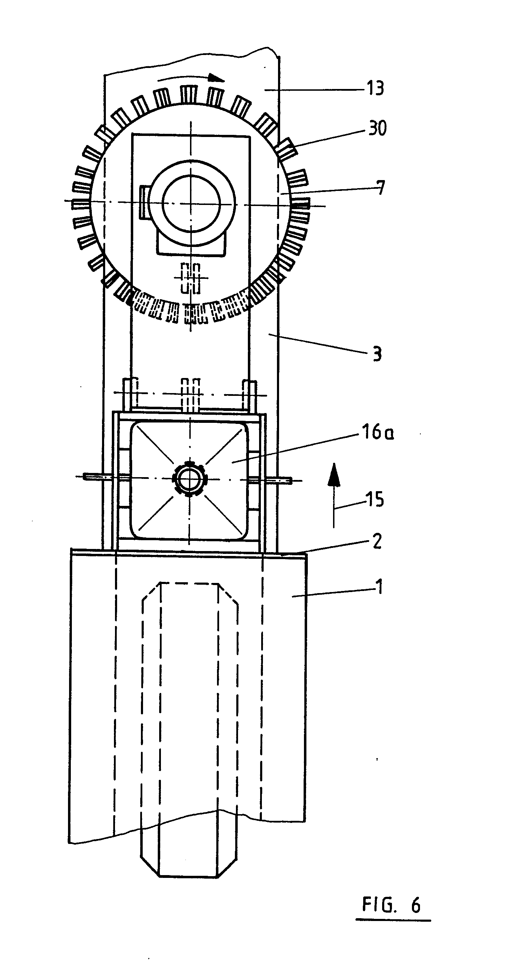

Bei dem Ausführungsbeispiel nach den Fig. 5 und 6 sind Bauteile, die den vorher beschriebenen Bauteilen entsprechen, mit gleichen Bezugszeichen versehen. Dieses Ausführungsbeispiel unterscheidet sich von den vorher beschriebenen Ausführungsbeispielen im wesentlichen dadurch, daß die Räumbürste 7' als Topfbürste ausgeführt und mit angenähert senkrechter Drehachse 28 am Bürstenträger 3' gelagert ist. Der Bürstenträger 3', der am Befestigungsträger 2' in einer waagerechten, quer zur Verfahrrichtung 15 gerichteten Achse 4 schwenkbar gelagert ist, trägt den senkrechten Bürstenmotor 8. Dessen Ausgangswelle ist mit der Topfbürste 7' verbunden, die in einem Lager 29 an der Unterseite des Bürstenträgers 3' gelagert ist.

Die Topfbürste 7' hat angenähert senkrechte, leicht schräg nach außen gerichtete, entlang einem Kreisring angeordnete Borsten 30, die die Fahrbahn 13 berühren.

Ein längenverstellbares Stellglied, das aus mit Gewinde versehenen Spannstangen 31 und einem Spannschloß 32 besteht, greift einerseits am Befestigungsträger 2' und andererseits am Bürstenträger 3' an und dient dazu, die Schrägstellung des Bürstenträgers 3' einzustellen. Vorzugsweise wird der Bürstenträger 3' leicht nach unten geneigt eingestellt, so daß die in Bewegungsrichtung 15 voranlaufende Kante der Topfbürste 7' die Fahrbahn 13 berührt. Zur Höheneinstellung und zum Ausgleich des Bürstenverschleißes kann der Bürstenträger 3' durch das Stellglied 31, 32 stärker geneigt werden.

Im Befestigungsträger 2' befindet sich der Taumittelbehälter 16a, dessen Sprühdüsen 16 auf die Fahrbahn 13 gerichtet sind. Es können beispielsweise mehrere Sprühdüsen nebeneinander an einem quer zur Fahrbahn 13 gerichteten Düsenrohr angeordnet sein.

Das Schneeräumgerät kann nach Bedarf von Hand oder auch automatisch eingeschaltet werden. In diesem Fall liefert ein Feuchtigkeits-und Temperaturfühler ein Signal, um das Schneeräumgerät bei den entsprechenden Witterungsbedingungen einzuschalten, wobei auch ein Ventil für die Sprühdüse 16 geöffnet wird.

## Ansprüche

1. Schneeräumgerät für einen Räumerarm an einem Nachklärbecken, der ein entlang einer Fahrbahn bewegbares Fahrwerk aufweist, dadurch gekennzeichnet, daß an dem Räumerarm (1) ein höhenverstellbarer Bürstenträger (3, 3') angebracht ist, in dem eine mit einem Bürstenmotor (8) verbundene Räumbürste (7, 7') gelagert ist.

2. Schneeräumgerät nach Anspruch 1, dadurch gekennzeichnet, daß die Räumbürste (7) zylindrisch mit radialen Borsten ausgeführt und am Bürstenträger (3) mit angenähert waagerechter Drehachse (12) gelagert ist, und daß die Drehachse (12) der Räumbürste (7) in einem von 90° abweichenden Winkel (a) zur Verfahrrichtung des Räumerarms (1) angeordnet ist.

3. Schneeräumgerät nach Anspruch 2, dadurch gekennzeichnet, daß ein die Räumbürste (7) und deren Bürstenmotor (8) tragendes Bürstenlager (6) am Bürstenträger (3) um eine angenähert senkrechte Schwenkachse (17) schwenkbar und festlegbar ist.

4. Schneeräumgerät nach Anspruch 2, dadurch gekennzeichnet, daß der Bürstenträger (3) an einem mit dem Räumerarm (1) verbundenen Befestigungsträger (2) um eine senkrechte Achse (17) - schwenkbar ist und daß ein mit dem Befestigungsträger (2) verbundenes längenverstellbares Stellglied (26, 27) am Bürstenträger (3) angreift.

5. Schneeräumgerät nach Anspruch 1, dadurch gekennzeichnet, daß die Umfangsbewegung (14) der angetriebenen Räumbürste (7) an der Bürstenunterseite in Bewegungsrichtung (15) des Räumerarms (1) gerichtet ist.

6. Schneeräumgerät nach Anspruch 1, dadurch gekennzeichnet, daß die Räumbürste (7') als Topfbürste ausgeführt und mit angenähert senkrechter Drehachse (28) am Bürstenträger (3') gelagert ist.

7. Schneeräumgerät nach Anspruch 1, dadurch gekennzeichnet, daß der Bürstenträger (3, 3') am Räumerarm (1) oder an einem mit dem Räumerarm (1) verbundenen Befestigungsträger (2, 2') um eine waagerechte, quer zur Verfahrrichtung gerichtete Achse (4) schwenkbar ist.

8. Schneeräumgerät nach Anspruch 7, dadurch gekennzeichnet, daß ein mit dem Räumerarm (1) oder mit dem Befestigungsträger (2') verbundenes, längenverstellbares Stellglied (31, 32) am Bürstenträger (3') angreift.

9. Schneeräumgerät nach Anspruch 1, dadurch gekennzeichnet, daß die Räumbürste (7') als Topfbürste ausgeführt und mit angenähert senkrechter Drehachse (28) am Bürstenträger (3') gelagert ist, daß der Bürstenträger (3') am Räumerarm (1) oder an einem mit dem Räumerarm (1) verbundenen Befestigungsträger (2') um eine waage-

rechte, quer zur Verfahrrichtung gerichtete Achse (4) schwenkbar ist und daß ein mit dem Räumerarm (1) oder mit dem Befestigungsträger (2') verbundenes, längenverstellbares Stellglied (31, 32) am Bürstenträger (3') angreift.

10. Schneeräumgerät nach Anspruch 1, dadurch gekennzeichnet, daß am Bürstenträger (3) oder am Befestigungsträger (2,2') mindestens eine nach unten gerichtete Sprühdüse (16) für ein Taumittel in Verfahrrichtung des Räumerarms (1) vor cder hinter der Räumbürste (7,7') angeordnet ist.

FIG. 1

FIG. 2

BOR 15012 G

0 285 910

FIG. 3

FIG 4

FIG. 5

FIG. 6